# NEUE EUROPÄISCHE PATENTSCHRIFT

(11) **EP 2 238 845 B2**
(45) Veröffentlichungstag und Bekanntmachung des Hinweises auf die Entscheidung über den Einspruch: **15.07.2020**
(45) Hinweis auf die Patenterteilung: 26.09.2012
(21) Anmeldenummer: 10158697.2
(22) Anmeldetag: 31.03.2010
(51) Int. Cl.: A24C 5/34, A24D 1/02

(54) **Verfahren zur optischen Kontrolle eines Umhüllungspapierstreifens der Tabak verarbeitenden Industrie**
Method for optical control of a wrapping paper strip for the tobacco industry
Procédé de contrôle optique d'une bande de papier d'enveloppement de l'industrie de traitement du tabac

(30) Priorität: 08.04.2009 DE 102009016499
(43) Veröffentlichungstag der Anmeldung: 13.10.2010
(73) Patentinhaber: Hauni Maschinenbau GmbH, 21033 Hamburg (DE)
(72) Erfinder: Meins, Karsten, 21481 Lauenburg (DE); Drews, Ingo, 21509 Glinde (DE); Kock, Hans-Henning, 21529 Kröppelshagen (DE)
(74) Vertreter: Seemann & Partner Patentanwälte mbB

(56) Entgegenhaltungen:
- EP-A1- 0 812 548
- EP-A1- 1 783 080
- WO-A1-2004/083834
- WO-A1-2005/046365
- WO-A2-01/89329
- WO-A2-2009/024870
- DE-A1- 2 940 408
- US-A- 4 563 228
- US-A- 4 645 921
- US-A- 4 645 921
- US-A- 6 075 882
- US-A1- 2004 118 418
- US-A1- 2005 172 977
- US-A1- 2005 172 977
- Excerpt of the Tobacco Encyclopedia of 1984, pages 18, 19, 77, 135 and 236
- excerpt of Wikipedia 'Fire safe Cigarette'
- excerpt of the homepage of the 'National Fire Protection Association', which relates to the FSC Law
- http://www.pewtrusts.org/en/research-and-a nalysis/blogs/stateline/2007/08/01/firesaf e-cigarette-laws-spread-quickly

## Beschreibung

Die Erfindung betrifft ein Verfahren zur optischen Kontrolle eines Umhüllungspapierstreifens der Tabak verarbeitenden Industrie, dessen Innenseite oder Außenseite Zonen mit brandhemmendem Material, so genannte "LIP-Zonen", aufweist, wobei das Vorhandensein und/oder weitere Eigenschaften von LIP-Zonen auf oder im Umhüllungspapierstreifen überprüft werden.

Bei der Produktion von Zigaretten werden zunehmend so genannte "LIP-Papiere" als Umhüllungspapiere für Zigaretten verwendet. Die Abkürzung "LIP" steht für "low ignition propensity", bezeichnet also Materialien mit einer geringen Neigung zur Entflammung bzw. brandhemmende Materialien. LIP-Papiere weisen an definierten Stellen bzw. in definierten Zonen Beschichtungen mit LIP-Materialien oder eine verringerte Luftdurchlässigkeit auf. Diese Zonen werden im Folgenden als LIP-Zonen des Umhüllungspapiers bezeichnet. Bereiche, die keine LIP-Beschichtung oder verringerte Luftdurchlässigkeit aufweisen, werden als LIP-freie Zonen bezeichnet.

LIP-Beschichtungen entweder werden bereits bei der Papierherstellung auf Umhüllungspapier aufgetragen, nachdem oder bevor das Papier in Streifen geschnitten wird und bevor die Umhüllungspapierstreifen auf eine Bobine aufgerollt werden, oder sie werden nach dem Abrollen von einer Bobine innerhalb einer Strangmaschine aufgetragen, bevor ein Tabakstrang gebildet und mit dem Umhüllungspapierstreifen umhüllt wird. Alternativ kann auch von einem brandhemmenden Basispapier Material entfernt werden, um LIP-freie Zonen zu erzeugen, etwa durch Abtragen einer Schicht des Materials oder durch Perforation.

Die Verwendung von LIP-Papieren für Zigaretten ist aus Sicherheitsgründen in mehreren Bundesstaaten der Vereinigten Staaten von Amerika Pflicht und wird zukünftig in der Europäischen Union vorgeschrieben. Daher müssen die Zigarettenhersteller sicher stellen, dass auf ihren Zigaretten die LIP-Aufträge bzw. LIP-Zonen gemäß den gesetzlichen Bestimmungen vorhanden sind. Die LIP-Beschichtung verändert die Beschaffenheit des Zigarettenpapiers und behindert den Luftdurchtritt in den LIP-Zonen, so dass die Abrauchwerte, die ebenfalls teilweise vorgeschrieben sind, verändert werden. Die Zigarettenhersteller müssen daher auch dafür Sorge tragen, dass sich die Beschichtung bzw. die Materialmenge in den LIP-Zonen im Rahmen einer geringen Variation halten, damit die vorgeschriebenen Abrauchwerte bei allen Zigaretten eingehalten werden.

Typischerweise befinden sich die LIP-Materialien auf der Innenseite des Umhüllungspapiers von Zigaretten. Sie werden in streifenförmigen Zonen appliziert, die an der fertigen Zigarette bzw. am Tabakstrang strang einen Ring bilden, oder auch in Längsrichtung der Zigarette bzw. des Strangs sich orientieren. Die Breite der transvers zum Tabakstrang bzw. zur Zigarette orientierten LIP-Zonen beträgt üblicherweise etwa 4 bis 8 mm, die Abstände etwa 1,5 bis 5 cm, abhängig vom Zigarettentyp. Üblicherweise ist eine erste LIP-Zone wenige Millimeter hinter dem vorderen Ende einer Zigarette angeordnet und eine zweite wenige Millimeter vor einem Filter. Es können auch eine oder mehrere weitere LIP-Zonen dazwischen vorgesehen sein.

Aus EP 1 783 080 A1 ist es bekannt, LIP-Streifen unmittelbar nach dem Bedrucken von Papierbahnen mit LIP-Material im Papierherstellungsprozess optisch zu erkennen. Die Standardabweichung der Bandbreiten der LIP-Zonen bzw. LIP-Streifen auf dem anschließend zu einer Bobine aufgerollten Umhüllungspapierstreifen wird analysiert. Aus dieser wiederholten Messung wird eine Vorhersage getroffen, wie sich die Abrauchwerte einer großen Population von Zigaretten, die aus einer Bobine hergestellt werden, entwickeln werden.

Aus EP 1 329 165 B1 und EP 1 321 048 B1 ist es bekannt, dass in einer Strangmaschine der Tabak verarbeitenden Industrie LIP-Streifen auf einen von einer Bobine abgezogenen ausgebreiteten Umhüllungspapierstreifen aufgebracht werden. Ein optischer Sensor ermittelt am Ende des Papierlaufs die Lage der LIP-Streifen auf dem ausgebreiteten Umhüllungspapierstreifen. Die Messung erfolgt im Durchlicht- bzw. Transmissionsverfahren. Die Messergebnisse werden zur Steuerung der LIP-Auftragseinrichtung in der Strangmaschine verwendet.

WO 2009/024870 A2 betrifft ein LIP-Papier sowie ein Verfahren zu dessen Herstellung, wobei die Positionierung der LIP-Streifen und der Einfluss der Positionierung auf die Abbrenneigenschaften untersucht werden. Stromabwärts einer Strangmaschine ist ein Sensor positioniert, der ausgebildet ist, ein Signal zu erzeugen, wenn er einen LIP-Streifen erfasst und wobei ein Cutter angesteuert wird, der auf das Signal des Sensors hin eine Schneidaktion durchführt.

WO 2004/083834 A1 betrifft ein Verfahren und eine Vorrichtung zur Bestimmung einer oder mehrerer physikalischen Eigenschaften eines gerollten Rauchartikels oder Filterstabes. Dabei kann es sich um die Länge des Artikels, seinen durchschnittlichen Durchmesser, die Ovalität, den Umfang, die Rundheit oder Form handeln. Auch eine optische Überprüfung quer verlaufender Streifenmuster findet statt.

Demgegenüber ist es Aufgabe der vorliegenden Erfindung, ein Verfahren zur optischen Kontrolle eines Umhüllungspapierstreifens der Tabak verarbeitenden Industrie in Bezug auf die Auftragung von LIP-Zonen bzw. LIP-Streifen zur Verfügung zu stellen, das eine gleichbleibende Qualität und gleichbleibende Abrauchwerte der hergestellten Zigaretten gewährleistet.

Die der Erfindung zugrunde liegende Aufgabe wird gelöst durch ein Verfahren zur optischen Kontrolle eines Umhüllungspapierstreifens der Tabak verarbeitenden Industrie, dessen Innenseite oder Außenseite Zonen mit brandhemmendem Material, so genannte "LIP-Zonen", aufweist, wobei das Vorhandensein und/oder weitere Eigenschaften von LIP-Zonen auf oder im Umhüllungspapierstreifen überprüft werden, wobei die optische Kontrolle des Umhüllungspapierstreifens an einem mit dem Umhüllungspapierstreifen umhüllten Tabakstrang der Tabak verarbeitenden Industrie oder an von mit dem Umhüllungspapierstreifen umhüllten stabförmigen Artikeln der Tabak verarbeitenden Industrie erfolgt, das dadurch weitergebildet ist, dass der Tabakstrang oder die Artikel zur Überprüfung an einem, insbesondere mehrkanaligen, optischen Messsystem vorbei oder durch das optische Messsystem hindurch gefördert wird, wobei das Signal jedes Kanals des Messsystems jeweils einem Verlauf einer optischen Beschaffenheit eines streifenförmigen Bereichs oder Teilbereichs der Oberfläche des Tabakstrangs oder der Artikel entspricht.

Im Rahmen der vorliegenden Erfindung wird unter einem Umhüllungspapier insbesondere Zigarettenpapier verstanden. Unter stabförmigen Artikeln der Tabak verarbeitenden Industrie werden insbesondere Tabakstöcke einfacher oder mehrfacher Gebrauchslänge oder fertige Zigaretten verstanden. Die einfache Gebrauchslänge ist die Länge des Tabakstocks einer fertigen Zigarette.

Die erfindungsgemäße Lösung beruht auf der Erkennung von LIP-Zonen auf dem Umhüllungspapierstreifen am umhüllen Tabakstrang bzw. an abgelängten bzw. abgeschnittenen umhüllten stabförmigen Artikeln. Da in einigen Strangmaschinen oder Filteransetzmaschinen bereits optische Prüfsysteme vorhanden sind, ist die Erfindung schnell und mit nur geringem Aufwand und Kosten umsetzbar. Geeignete Prüfsysteme sind beispielsweise das ORIS-System der Anmelderin in Strangmaschinen, beispielsweise gemäß DE 34 37 580 C2 oder EP 1 782 703 A1, oder das OCIS-System der Anmelderin in Filteransetzmaschinen, die jeweils ausgebildet sind, die Oberfläche des Tabakstrangs bzw. der stabförmigen Artikel optisch zu prüfen.

Unter einer optischen Prüfung wird dabei eine Prüfung mit elektromagnetischer Strahlung im sichtbaren Bereich des Spektrums oder in angrenzenden, für das menschliche Auge unsichtbaren Bereichen verstanden, etwa im Infrarot- oder Ultraviolettbereich.

Nach der Umhüllung des Tabakstrangs findet die optische Prüfung vorzugsweise im Reflexionsverfahren statt, es wird also Licht gemessen, das von der Oberfläche des Strangs oder des Artikels reflektiert wird.

Die bekannten optischen Prüfsysteme, etwa die ORIS- und OCIS-Systeme der Anmelderin, sind dazu ausgebildet, mittels eines Kamerasystems Bilder von Strang- bzw. Zigarettenoberflächen aufzunehmen und in einer Auswerteeinheit zu analysieren. Zigaretten mit erkannten Störstellen, z.B. mit dunklen Flecken, die auf Risse, Verunreinigungen oder Löcher des Umhüllungspapiers zurückgehen, werden über ein Schussventil aus der laufenden Produktion entfernt.

Da LIP-Materialien vor allem auf der Seite eines Umhüllungspapiers aufgetragen werden, die beim umhüllten Strang bzw. Artikel die Innenseite des Umhüllungspapiers bilden, wird das von außen sichtbare optische Bild des Umhüllungspapiers nur indirekt beeinflusst. Beim flüchtigen Betrachten sollen LIP-Zonen nicht zu erkennen sein.

Aus diesem Grund war im Stand der Technik die Überprüfung des Umhüllungspapierstreifens direkt nach dem Auftrag der LIP-Streifen bzw. LIP-Zonen auf das Umhüllungspapier erfolgt, und zwar entweder bevor das Umhüllungspapier bzw. die Umhüllungspapierstreifen auf eine Bobine aufgerollt wurden oder, wenn der Auftrag nach dem Abrollen von der Bobine erfolgt, vor der Umhüllung eines Tabakstrangs mit dem Umhüllungspapierstreifen.

Entsprechend erfolgt gemäß EP 1 783 080 A1 die optische Erkennung vor dem Aufrollen auf eine Bobine auf der Seite, auf der LIP-Streifen auf das Umhüllungspapier aufgetragen sind, so dass die LIP-Streifen offen zutage liegen und direkt gemessen werden. Gemäß EP 1 329 165 B1 und EP 1 321 048 B1 wird ein ausgebreiteter Umhüllungspapierstreifen mit LIP-Zonen in einem Durchlichtverfahren durchleuchtet, so dass auch in diesem Fall eine direkte Beeinflussung des transmittierten Lichts durch die LIP-Zone erfolgt. Beide Messmethoden garantieren ein hohes Kontrastverhältnis.

Beim erfindungsgemäßen Verfahren ist der erzielbare Kontrast aufgrund der indirekten Messung im Reflexionsverfahren geringer als bei den bekannten Verfahren. Dennoch hinterlassen LIP-Zonen eine für ein optisches Prüfsystem sichtbare Signatur, da die Oberflächeneigenschaften des Umhüllungspapiers, insbesondere seine Porosität und Opazität, und somit seine Reflexionseigenschaften, verändert werden. Es hat sich herausgestellt, dass auch nach der Umhüllung eines Tabakstrangs mit einem Umhüllungspapierstreifen bzw. nach dem Ablängen von stabförmigen Artikeln von dem umhüllten Tabakstrang LIP-Zonen als "graue Streifen" bei der optischen Erkennung im Bild erscheinen und in einem Teil einer Auswerteeinheit einer besonderen Analyse unterzogen werden können.

Die Kontrolle der LIP-Streifen bzw. -Zone am bereits umhüllten Strang bzw. an den abgelängten Artikeln hat den weiteren Vorteil, dass die Qualitätskontrolle der daraus hergestellten Zigaretten bezüglich ihrer Abraucheigenschaften und weiterer Eigenschaften, die mit den LIP-Zonen zusammenhängen, direkt am Ort des Tabakstrangs bzw. der Artikel und somit in direktem Zusammenhang mit den herzustellenden Artikeln gemessen werden. Dies ist bei den bekannten Methoden nicht möglich, da nach der optischen Kontrolle der LIP-Zonen auf dem Umhüllungspapierstreifen noch der weitere Verfahrensschritt des Umhüllens des Tabakstrangs erfolgt. Dieser weitere Schritt hat beim erfindungsgemäßen Verfahren bereits stattgefunden. In diesem zusätzlichen Verfahrensschritt ist es möglich, dass der Umhüllungspapierstreifen gedehnt oder gestaucht wird, wodurch sich die Lage der aufgetragenen LIP-Zonen in Bezug auf die abzulängenden Tabakstöcke systematisch verschiebt, so dass sich die Abrauchwerte der daraus hergestellten fertigen Zigaretten verändern.

Erfindungsgemäß werden der Tabakstrang oder die Artikel zur Überprüfung an einem mehrkanaligen optischen Messsystem vorbei oder durch das optische Messsystem hindurch gefördert, wobei das Signal jedes Kanals des Messsystems jeweils einem Verlauf einer optischen Beschaffenheit eines streifenförmigen Bereichs oder Teilbereichs der Oberfläche des Tabakstrangs oder der Artikel entspricht. Auf diese Weise erkennt das optische Messsystem die sich verändernden Grauwerte oder Farbwerte am Durchgang einer LIP-Zone. Die einzelnen Kanäle sind jeweils auf einen schmalen Abschnitt entlang dem Umfang des Tabakstrangs oder der Länge der Artikel gerichtet, wenn diese queraxial gefördert werden. Jeder Kanal misst somit, wie sich die Helligkeit der Oberfläche des Umhüllungsstreifens in dem von dem jeweiligen Kanal betrachteten Abschnitt mit der Zeit während der Förderung am Messsystem vorbei oder durch es hindurch verändert.

Erfindungsgemäß werden in jedem Kanal Messwerte erzeugt, die der optischen Beschaffenheit eines Bereichs oder Teilbereichs der Oberfläche des Umhüllungspapierstreifens entsprechen, deren Ausdehnung in Förderrichtung des Tabakstrangs oder der Artikel kürzer ist als die Ausdehnung einer LIP-Zone in derselben Richtung. Dies bedeutet eine zeit- bzw. ortsaufgelöste Messung der Helligkeitswerte. Die Oberfläche des Umhüllungsstreifens wird somit in zwei Dimensionen gescannt, und zwar quer (senkrecht) zur Transportrichtung mittels der Mehrzahl von Kanälen des Messsystems und in Transportrichtung mittels zeitlicher Auflösung.

Vorzugsweise werden in Transportrichtung Abschnitte von der Länge von weniger als 1 mm, weiter vorzugsweise weniger als 0,5 mm gemessen. Diese Rasterung erlaubt eine Digitalisierung der Messwerte und eine ortsaufgelöste Erkennung von LIP-Zonen und ihren Rändern. Da diese Rasterung kleiner ist als die Ausdehnung von LIP-Zonen, die üblicherweise 4 bis 8 mm breit sind, können auch die Ränder der LIP-Zonen sowie deren innere Struktur erkannt werden. Bei einer Stranggeschwindigkeit moderner Strangmaschinen von ca. 5 bis 13 Meter pro Sekunde bedeutet dies eine zeitliche Auflösung der einzelnen Aufnahmen bzw. Messwerte von ca. 1/5000 bis mehr als 1/26000 Sekunde bzw. einer Bildwiederholungsrate von 5 kHz bis mehr als 26 kHz.

Erfindungsgemäß wird aus den Signalen oder Messwerten der Kanäle des Messsystems ein Summensignal, ein Summenmesswert, ein Durchschnittssignal oder ein Durchschnittsmesswert gebildet, das oder der der Erkennung und/oder Überprüfung der LIP-Zonen zugrunde gelegt wird. Diese Summen- bzw. Durchschnittsbildung über alle Kanäle des Messsystems erzeugt somit einen einzelnen Messwert pro Aufnahme. Das Summen- bzw. Durchschnittssignal bzw. die entsprechenden Messwerte haben damit gegenüber den einzelnen Kanälen der Rasterung eine höhere statistische Signifikanz, so dass die Übergänge von LIP-freien Zonen zu LIP-Zonen deutlich erkannt werden. Um die statistische Signifikanz der Messung vorzugsweise weiter zu erhöhen, wird ein Mittelwert oder ein laufender Mittelwert über die einzelnen Aufnahmen bzw. Messwerte gebildet, insbesondere ein Mittelwert über 3 bis 6 aufeinander folgende Messwerte. Die Steilheit der bei einer solchen Messung auftretenden Flanken in der Farb- oder Grauwertverteilung gibt einen Aufschluss über die Begrenzung der LIP-Zonen und ist eine weitere Eigenschaft, die vorzugsweise gemessen wird.

Erfindungsgemäß werden LIP-Zonen auf einem umhüllten Tabakstrang oder einem umhüllten Artikel als Bereiche mit verändertem Farb- oder Grauwert gegenüber Bereichen des Umhüllungspapierstreifens ohne LIP-Zonen erkannt. Ein Farbwert ist in diesem Zusammenhang eine Information über Farbe und Helligkeit des gemessenen Objekts.

Als weitere Eigenschaften werden vorteilhafterweise Form, Vollständigkeit, Größe und/oder Position von LIP-Zonen, Abstände zwischen LIP-Zonen und/oder Farb- oder Grauwertintensität, Opazität und/oder Porosität des Umhüllungspapierstreifens in den LIP-Zonen überprüft. Eine Porositätsbestimmung erfolgt vorzugsweise über die Bestimmung der Schwankungen der Farb- oder Grauwerte innerhalb einer LIP-Zone, die durch Änderung der Opazität hervorgerufen wird. Auf diese Weise erfolgt eine Überprüfung der LIP-Zonen in örtlicher Hinsicht bezüglich ihrer Position und/oder Wiederholung, in quantitativer Hinsicht bezüglich ihrer Anzahl und/oder Fläche und/oder in qualitativer Hinsicht bezüglich ihrer Porosität und Opazität.

Vorzugsweise erfolgt die optische Überprüfung auf einer von der Auftragsseite einer LIP-Zone abgewandten Seite des Tabakstrangs oder des Artikels, insbesondere, wenn die LIP-Beschichtung auf der Innenseite des Umhüllungsstreifens aufgebracht ist.

In einer bevorzugten Weiterbildung wird für jede zu überprüfende Eigenschaft ein gemessener Wert daraufhin überprüft, ob er mit einem vorgebbaren Sollwert innerhalb eines vorgebbaren Toleranzbereichs übereinstimmt. Auf diese Weise wird die Qualität des LIP-Materialauftrags bzw. des Materialabtrags in der LIP-Zone beurteilt.

Vorteilhafterweise wird ein Abschnitt eines Tabakstrangs oder ein Artikel, bei dem eine LIP-Zone fehlt und/oder bei dem ein gemessener Wert einer LIP-Zone über den vorgebbaren Toleranzbereich hinaus vom vorgebbaren Sollwert abweicht, von der weiteren Verarbeitung ausgeschlossen. Dies kann durch Ausschuss der aus solchen Artikeln bzw. Abschnitten des Tabakstrangs hergestellten Artikel erfolgen. Bezüglich der Positionierung von LIP-Zonen auf dem fertigen Produkt ist etwa ein Toleranzbereich von 0,5 mm oder 1 mm von einer Sollposition auszugehen. Artikel mit fehlenden LIP-Zonen werden vorzugsweise ohne Toleranz ausgeschleust, die erlaubte Abweichung vom Sollwert beträgt bezüglich Opazität und Porosität vorzugsweise weniger als 10 %, weiter bevorzugt weniger als 5%.

Eine Abweichung vom Sollwert muss nicht notwendigerweise zu einem Ausschuss des betroffenen Artikels führen. In einer bevorzugten Weiterbildung ist vorgesehen, dass in einer LIP-Zone die Porosität des Umhüllungspapierstreifens durch nachträgliche Perforation erhöht wird, wenn die als weitere Eigenschaft gemessene Porosität des Umhüllungspapierstreifens in der LIP-Zone unterhalb einer vorgebbaren Sollporosität liegt. Auf diese Weise wird die Abraucheigenschaft, die durch eine, insbesondere zu dichte LIP-Beschichtung verschlechtert worden ist, durch nachträgliche Perforation wieder in einen Sollbereich gebracht.

In einer bevorzugten Ausführungsform ist vorgesehen, dass zur Herstellung des Tabakstrangs oder der Artikel zunächst der Umhüllungspapierstreifen in einer Strangmaschine der Tabak verarbeitenden Industrie von einer Bobine abgerollt wird, wobei der Umhüllungspapierstreifen LIP-Zonen aufweist. Diese sind somit auf den Umhüllungspapierstreifen aufgetragen worden, bevor er auf die Bobine aufgerollt worden war. Alternativ dazu ist ebenfalls bevorzugt vorgesehen, dass zur Herstellung des Tabakstrangs oder der Artikel zunächst der Umhüllungspapierstreifen in einer Strangmaschine der Tabak verarbeitenden Industrie von einer Bobine abgerollt wird, wobei LIP-Zonen nach dem Abrollen von der Bobine auf den Umhüllungspapierstreifen aufgebracht werden. Die beiden Alternativen entsprechen somit, bis auf die optische Erkennung von LIP-Zonen, dem in EP 1 783 080 A1 einerseits und EP 1 329 165 B1 und EP 1 321 048 B1 andererseits dargestellten Szenarien. Im Unterschied zu diesen Dokumenten, deren Offenbarungsgehalt vollständig in der vorliegenden Patentanmeldung aufgenommen sein soll, ist erfindungsgemäß in beiden Fällen nunmehr die optische Kontrolle der LIP-Zonen nach der Umhüllung des Tabakstrangs vorgesehen.

Eine wichtige Aufgabe der vorliegenden Erfindung ist es, zu gewährleisten, dass die LIP-Zone auf den fertigen Produkten, d.h. den fertigen Zigaretten, jeweils an gleichbleibenden Positionen auftreten, nämlich beispielsweise einige Millimeter hinter dem vorderen Ende einer Zigarette, an der die Zigarette angezündet wird, sowie einige Millimeter vor dem Filter, sowie ggf. weitere LIP-Zonen in der Mitte der Zigarette. Die vorderste LIP-Zone verhindert, dass eine Zigarette, die nur kurz angezündet wird aber nicht weitergeraucht wird, immer weiter durch- bzw. abglüht. Die hinterste LIP-Zone verhindert, dass eine nicht zu Ende gerauchte Zigarette bis zum Filter von selbst abglüht.

Um eine derartige gleichbleibende Anordnung der LIP-Streifen in den fertigen Artikeln zu gewährleisten, ist vorzugsweise vorgesehen, dass als weitere Eigenschaft eine Drift der Position von LIP-Zonen auf dem Umhüllungspapierstreifen bei aufeinander folgenden Artikeln oder bei aufeinander folgenden Abschnitten des Tabakstrangs gemessen wird, die geschnittenen stabförmigen Artikeln entsprechen, wobei die Drift durch eine Vergrößerung oder Verkleinerung der Abstände bei der Aufbringung der LIP-Zonen auf den Umhüllungspapierstreifen kompensiert wird.

Eine solche Drift tritt auf, wenn die Abstände von Gruppen von LIP-Streifen, die jeweils zu einem vom Tabakstrang abgeschnittenen Artikel gehören, sich in ihren Abständen ein wenig und systematisch von der Länge der abgeschnittenen Artikel unterscheidet. So kommt es bei jedem aufeinanderfolgenden abgeschnittenen Artikel oder Tabakstock zu einem sich vergrößernden Versatz der Postionen der LIP-Streifen. Selbst, wenn ein solcher Versatz pro Abschnitt nur 0,01 mm beträgt, addiert sich ein solcher Versatz im Verlauf der Herstellung von nur 100 Tabakstöcken bereits auf eine Drift von 1 mm. Erfindungsgemäß wird eine solche Drift mit einer Vergrößerung oder Verkleinerung der Abstände bei der Aufbringung der LIP-Zonen auf den Umhüllungspapierstreifen kompensiert, in dem Fall, in dem die LIP-Streifen beim Abziehen von der Bobine erst auf den Umhüllungspapierstreifen aufgebracht werden.

Wenn die LIP-Streifen bereits beim Abziehen von einer Bobine auf den Umhüllungspapierstreifen vorhanden sind, wird erfindungsgemäß als weitere Eigenschaft eine Drift der Position von LIP-Zonen auf dem Umhüllungspapierstreifen bei aufeinander folgenden Artikeln oder bei aufeinander folgenden Abschnitten des Tabakstrangs gemessen, die geschnittenen stabförmigen Artikeln entsprechen, wobei die Drift durch eine Änderung der Geschwindigkeit der Förderung des Tabakstrangs vor dem Schneiden der Artikel kompensiert wird, wobei die Fördergeschwindigkeit bei einem Vorauseilen der LIP-Zonen vor ihrer Sollposition verkleinert und bei einem Nacheilen vergrößert wird.

Der Umhüllungspapierstreifen ist in geringem Maße elastisch. Er kann einer Dehnung oder Stauchung von 1 ‰ bis 5 ‰ unterworfen werden, ohne zu reißen. Auf die beschriebene erfindungsgemäße Weise wird somit die Lage des Schnitts des Tabakstrangs zwischen den erkannten LIP-Zonen geregelt. Eine Vorrichtung, mit der eine solche Geschwindigkeitsänderung der Förderung des umhüllten Tabakstrangs möglich ist, ist beispielsweise aus EP 1 913 824 A1 bekannt.

Schließlich wird die der Erfindung zugrunde liegende Aufgabe auch gelöst durch die Verwendung eines optischen Sensors oder eines optischen Messsystems in einer Maschine der Tabak verarbeitenden Industrie zur Überprüfung des Vorhandenseins und/oder weiterer Eigenschaften von LIP-Zonen auf oder in einem Umhüllungspapierstreifen eines mit dem Umhüllungspapierstreifen umhüllten Tabakstrangs der Tabak verarbeitenden Industrie oder eines mit dem Umhüllungspapierstreifen umhüllten stabförmigen Artikels der Tabak verarbeitenden Industrie, insbesondere in einem oben beschriebenen Verfahren.

Die Erfindung wird nachfolgend anhand eines Ausführungsbeispiels unter Bezugnahme auf die Zeichnungen exemplarisch beschrieben,
wobei bezüglich aller im Text nicht näher erläuterten erfindungsgemäßen Einzelheiten ausdrücklich auf die Zeichnungen verwiesen wird. Es zeigen:
- Fig. 1: eine Zigarettenstrangmaschine vom Typ "PROTOS" der Patentanmelderin,
- Fig. 2: schematisch einen Umhüllungspapierstreifen mit LIP- Zonen,
- Fig. 3: schematisch eine fertige Filterzigarette mit LIP-Zonen und
- Fig. 4: eine schematische Darstellung des räumlichen und zeit- lichen Verlaufs eines Messsignals für einen Strang mit LIP-Zonen.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

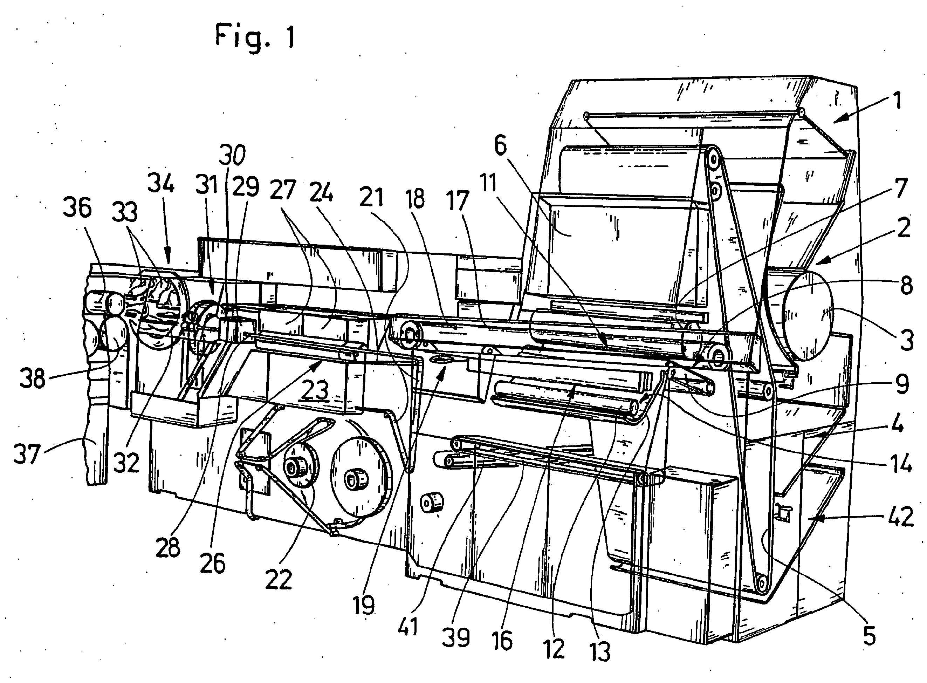

Bei der in Fig. 1 schematisch dargestellten Zigarettenstrangmaschine PROTOS der Patentanmelderin wird von einer Schleuse 1 ein Vorverteiler 2 portionsweise mit Tabak beschickt. Eine Entnahmewalze 3 des Vorverteilers 2 ergänzt gesteuert einen Vorratsbehälter 4 mit Tabak, aus dem ein Steilförderer 5 Tabak entnimmt und einen Stauschacht 6 gesteuert beschickt.

Aus dem Stauschacht 6 entnimmt eine Stiftwalze 7 einen gleichförmigen Tabakstrom, der von einer Ausschlagwalze 8 aus den Stiften der Stiftwalze 7 herausgeschlagen und auf ein mit konstanter Geschwindigkeit umlaufendes Streutuch 9 geschleudert wird. Ein auf dem Streutuch 9 gebildetes Tabakvlies wird in eine Sichteinrichtung 11 geschleudert, die im Wesentlichen aus einem Luftvorhang besteht, den größere bzw. schwerere Tabakteile passieren, während alle anderen Tabakteilchen von der Luft in einen von einer Stiftwalze 12 und einer Wand 13 gebildeten Trichter 14 gelenkt werden.

Von der Stiftwalze 12 wird der Tabak in einen Tabakkanal 16 gegen einen Strangförderer 17 geschleudert, an dem der Tabak mittels in eine Unterdruckkammer 18 gesaugter Luft gehalten und ein Tabakstrang aufgeschauert wird.

Ein Egalisator 19 entfernt überschüssigen Tabak vom Tabakstrang, der dann auf einen im Gleichlauf geführten Zigarettenpapierstreifen 21 gelegt wird. Der Zigarettenpapierstreifen 21 wird von einer Bobine 22 abgezogen, durch ein Druckwerk 23 geführt und auf ein angetriebenes Formatband 24 gelegt. Das Formatband 24 transportiert den Tabakstrang und den Zigarettenpapierstreifen 21 durch ein Format 26, in dem der Zigarettenpapierstreifen 21 um den längsaxial geförderten Tabakstrang gefaltet wird, sodass noch eine Kante absteht, die von einem nicht dargestellten Leimapparat in bekannter Weise beleimt wird. Darauf wird die Klebnaht geschlossen und von einer Tandemnahtplätte 27 getrocknet.

Ein so als Materialstrang gebildeter, umhüllter Tabakstrang 28 durchläuft ein Strangdichtemessgerät 29, das den Egalisator 19 steuert, und wird von einem Messerapparat 31 in doppelt lange Zigaretten 32 geschnitten. Die doppelt langen Zigaretten 32 werden von einer gesteuerte Arme 33 aufweisenden Übergabevorrichtung 34 einer Übernahmetrommel 36 einer Filteransetzmaschine 37 übergeben, auf deren Schneidtrommel 38 sie mit einem Kreismesser in Einzelzigaretten aufgeteilt werden.

Förderbänder 39, 41 fördern überschüssigen Tabak in einen unterhalb von dem Vorratsbehälter 4 angeordneten Behälter 42, aus dem der rückgeführte Tabak vom Steilförderer 5 wieder entnommen wird.

An dem Ort des Strangdichtemessgeräts 29 ist zusätzlich zum Strangdichtemessgerät 29 oder an dessen Stelle erfindungsgemäß ein optisches Messsystem 30 angeordnet, das den mit dem Umhüllungspapierstreifen 21 umhüllten Tabakstrang 28 optisch überprüft. Dabei kann es sich um das ORIS-System der Anmelderin handeln.

Das optische Messsystem 30 weist eine Vielzahl von Kanälen auf, beispielsweise 140 Kanäle, die jeweils einen schmalen Streifen der Oberfläche des umhüllten Tabakstrangs 28 überprüfen. Wenn eine LIP-Zone quer zur Längsachse des Tabakstangs 28 angeordnet ist, bildet die LIP-Zone bei der Umhüllung des Tabakstrangs 28 einen Ring, so dass alle Kanäle des optischen Messsystems 30 zur gleichen Zeit einen Übergang von einer LIP-freien Zone zu einer LIP-Zone erkennen. Im Falle einer optischen Überprüfung in einer Filteransetzmaschine kommt bspw. das OCIS-System der Anmelderin zum Einsatz. Hierbei erfolgt die Signalauswertung in analoger Weise zum ORIS-System.

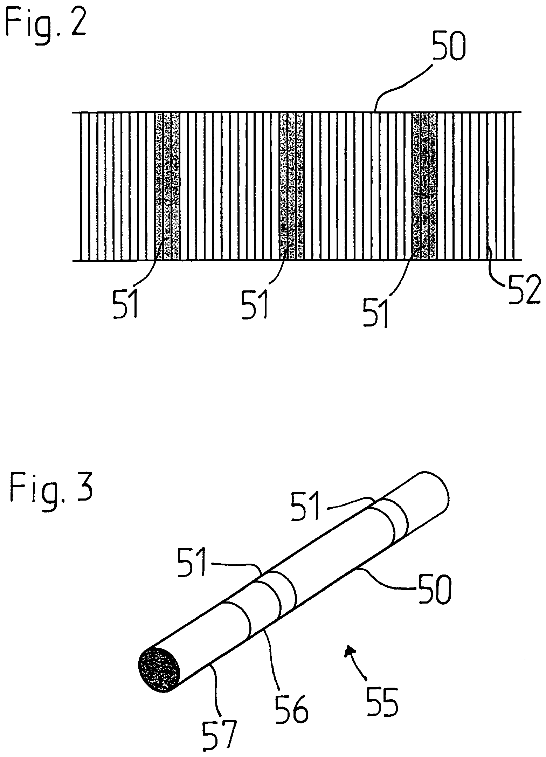

In Fig. 2 ist schematisch ein Abschnitt eines Umhüllungspapierstreifens 50 in ausgebreitetem Zustand mit LIP-Zonen 51 dargestellt. Die LIP-Zonen 51 erstrecken sich quer über den Umhüllungspapierstreifen 50. Eine typische Breite von LIP-Zonen ist etwa 4 bis 8 mm, der Abstand beträgt 1 bis 3 cm. Ebenfalls dargestellt sind so genannte Verge-Streifen. Diese rein dekorativen Streifen auf dem Umhüllungspapierstreifen 50 werden von einem optischen System 30 ebenfalls wahrgenommen.

In Fig. 3 ist schematisch eine fertige Filterzigarette 55 mit LIP-Zonen 51 dargestellt. Die dem Betrachter zugewandte Seite weist den Filter 57 auf, an den sich der Tabakstock 56 mit zwei LIP-Zonen 51 anschließt. Da das LIP-Material an der Innenseite aufgetragen ist, unterscheidet sich der Farb- oder Grauwert der LIP-Zonen 51 von den LIP-freien Zonen nur wenig.

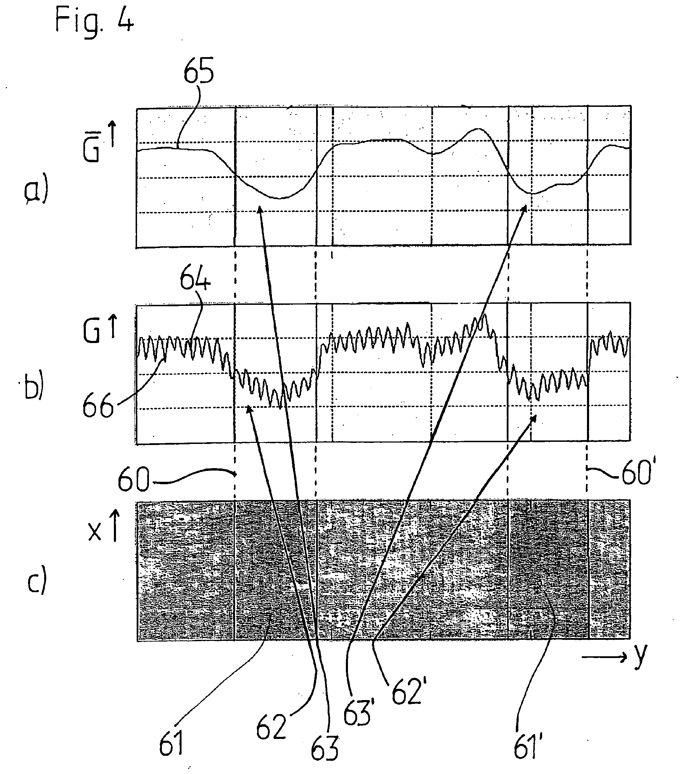

In den Figuren 4a bis 4c sind schematisch typische Messsignale des optischen Messsystems im räumlichen bzw. zeitlichen Verlauf in verschiedenen Verarbeitungszuständen dargestellt. Im unteren Bild, Fig. 4c, sind gemessene Grauwerte eines Umhüllungspapierstreifens mit LIP-Zonen 61, 61' zweidimensional dargestellt. Die Breite des Umhüllungspapierstreifens ist mit der Koordinate "x" bezeichnet, die Länge bzw. Förderrichtung mit der Koordinate "y". Deutlich zu erkennen in der zweidimensionalen Grauwertverteilung sind die dunkleren Zonen 61, 61', die mit LIP-Material an der Innenseite beschichtet sind. Die Begrenzung dieser Zonen ist mit den Bezugszeichen 60, 60' angedeutet. Ebenfalls deutlich erkennbar sind Verge-Streifen, die eine deutlich höhere räumliche Frequenz aufweisen. Der Abstand zwischen den Vergé-Streifen beträgt üblicherweise 0,5 bis 1 mm.

Im unteren Drittel von Fig. 4c ist außerdem ein schmaler Streifen in Richtung der Längsachse des Umhüllungspapierstreifens erkennbar, der eine weniger deutliche Grauwertabstufung aufweist als der Rest des Umhüllungspapierstreifens. Hierbei handelt es sich um den überlappenden Bereich des Papiers, der die Naht des Umhüllungspapierstreifens bildet. Da dieser Nahtbereich mit einem Klebstoff zwischen den überlappenden Papierbereichen verklebt ist, ist das optische Erscheinungsbild gegenüber dem Rest des Umhüllungspapierstreifens an dieser Stelle verändert.

Analog hierzu ist es möglich, Farbwertverteilungen anstelle von Grauwertverteilungen in gleicher Weise auszuwerten. In manchen Fällen ist dies überdies vorteilhaft, wenn etwa bei unzulänglichem Helligkeitskontrast eine durch die Sensoren wahrnehmbare Farbveränderung zwischen LIP-Zonen und LIP-freien Zonen eintritt.

In Fig. 4b ist die voll ortsaufgelöste Projektion des zweidimensionalen Messsignals aus Fig. 4c auf die Y-Achse dargestellt. Die vertikale Achse ist mit "G" bezeichnet und repräsentiert den durchschnittlichen Grauwert aller Kanäle des optischen Messsystems 30. Deutlich erkennbar sind in dem räumlichen bzw. seitlichen Verlauf des voll aufgelösten Signals 64 die LIP-Zonen 61, 61', die zu einem verminderten Grauwert in den Signalen 62, 62' führen. Ebenfalls deutlich erkennbar ist der Jitter 66, der aufgrund der Vergé-Streifen entsteht.

In Fig. 4a ist das voll aufgelöste Signal 64 über mehrere zeitlich aufeinander folgende Messungen gemittelt worden, so dass ein gemitteltes Signal 65 entsteht, das den Jitter 66 aufgrund der Verge-Streifen nicht enthält. Das gemittelte Signal 65 zeigt an den Stellen der LIP-Zonen 61, 61' deutlich, dass die Grauwerte dunkler geworden sind, so dass die Helligkeit des gemittelten Signals 63, 63' in den LIP-Zonen 61, 61 deutlich reduziert ist.

Beispielsweise anhand des gemittelten Signals 65 lässt sich aufgrund der Flankensteilheit und/oder der Höhe der Grauwertschwankungen erkennen, an welcher Position sich die LIP-Streifen befinden und welche Intensität die LIP-Beschichtung in diesen Zonen hat.

Bei der wiederholten Messung der LIP-Streifen bei aufeinanderfolgenden Artikeln bzw. Tabakstrangabschnitten ist sehr schnell mit hoher statistischer Signifikanz eine Drift der Lage der LIP-Streifen erkennbar, auch wenn nicht jede einzelne Messung die Position eines LIP-Streifens auf den Bruchteil eines Zehntel- oder Hundertstel-Millimeters genau bestimmt. Die erkannte Drift der Position der LIP-Zonen kann kompensiert werden, indem die Fördergeschwindigkeit des Tabakstrangs oder der Auftrag der LIP-Zonen auf den Umhüllungspapierstreifen geregelt wird.

Auf diese Weise wird bei einer großen Anzahl produzierter Zigaretten die Einhaltung der gewünschten und teilweise vorgeschriebenen Abrauchwerte innerhalb geringer Abweichungen sichergestellt.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 1: Schleuse
- 2: Vorverteiler
- 3: Entnahmewalze
- 4: Vorratsbehälter
- 5: Steilförderer
- 6: Stauschacht
- 7: Stiftwalze
- 8: Ausschlagwalze
- 9: Streutuch
- 11: Sichteinrichtung
- 13: Band
- 14: Trichter
- 16: Tabakkanal
- 17: Strangförderer
- 18: Unterdruckkammer
- 19: Egalisator
- 21: Zigarettenpapierstreifen
- 22: Bobine
- 23: Druckwerk
- 24: Formatband
- 26: Format
- 27: Tandemnahtplätte
- 28: umhüllter Tabakstrang
- 29: Strangdichtemessgerät
- 30: Optisches Messsystem
- 31: Messerapparat
- 32: doppelt lange Zigaretten
- 33: Arme
- 34: Übergabevorrichtung
- 36: Übernahmetrommel
- 37: Filteransetzmaschine
- 38: Schneidtrommel
- 39: Förderband
- 41: Förderband
- 42: Behälter
- 50: Umhüllungspapierstreifen
- 51: LIP-Zone
- 52: Vergé-Streifen
- 55: fertige Filterzigarette
- 56: Tabakstock
- 57: Filter
- 60, 60': Begrenzung einer LIP-Zone
- 61, 61': LIP-Zone
- 62, 62': voll aufgelöstes Signal einer LIP-Zone
- 63, 63': gemitteltes Signal einer LIP-Zone
- 64: voll aufgelöstes Signal
- 65: gemitteltes Signal
- 66: Jitter aufgrund von Vergé-Streifen

## Patentansprüche

1. Verfahren zur optischen Kontrolle eines Umhüllungspapierstreifens (21, 50) der Tabak verarbeitenden Industrie, dessen Innenseite oder Außenseite Zonen (51, 61, 61') mit brandhemmendem Material ("LIP"-Zonen) aufweist, wobei das Vorhandensein und/oder weitere Eigenschaften von LIP-Zonen (51, 61, 61') auf oder in dem Umhüllungspapierstreifen (21, 50) überprüft wird, wobei die optische Kontrolle des Umhüllungspapierstreifens (21, 50) an einem mit dem Umhüllungspapierstreifen (21, 50) umhüllten Tabakstrang (28) der Tabak verarbeitenden Industrie oder an von mit dem Umhüllungspapierstreifen (21, 50) umhüllten stabförmigen Artikeln (32, 56) der Tabak verarbeitenden Industrie erfolgt, **dadurch gekennzeichnet, dass** der Tabakstrang (28) oder die Artikel (32, 56) zur Überprüfung an einem mehrkanaligen optischen Messsystem (30) vorbei oder durch das optische Messsystem (30) hindurch gefördert werden, wobei das Signal jedes Kanals des Messsystems (30) jeweils einem Verlauf einer optischen Beschaffenheit eines streifenförmigen Bereichs oder Teilbereichs der Oberfläche des Tabakstrangs (28) oder der Artikel (32, 56) entspricht, wobei in jedem Kanal Messwerte erzeugt werden, die der optischen Beschaffenheit eines Bereichs oder Teilbereichs der Oberfläche des Umhüllungspapierstreifens (21, 50) entsprechen, deren Ausdehnung in Förderrichtung des Tabakstrangs (28) oder der Artikel (32, 56) kürzer ist als die Ausdehnung einer LIP-Zone (51, 61, 61') in derselben Richtung, wobei aus den Signalen oder Messwerten der Kanäle des Messsystems (30) ein Summensignal, ein Summenmesswert, ein Durchschnittssignal (62, 62', 63, 63', 64, 65) oder ein Durchschnittsmesswert oder ein laufender Mittelwert gebildet wird, das oder der der Erkennung und/oder Überprüfung der LIP-Zonen zugrunde gelegt wird, wobei LIP-Zonen (51, 61, 61') auf einem umhüllten Tabakstrang (28) oder einem umhüllten Artikel (32, 56) als Bereiche (60, 60') mit verändertem Grauwert oder Farbwert gegenüber Bereichen des Umhüllungspapierstreifens (21, 50) ohne LIP-Zonen (51, 61, 61') erkannt werden, wobei als weitere Eigenschaft eine Drift der Position von LIP-Zonen (51, 61, 61') auf dem Umhüllungspapierstreifen (21, 50) bei aufeinander folgenden Artikeln (32, 56) oder bei aufeinander folgenden Abschnitten des Tabakstrangs (28) gemessen wird, die geschnittenen stabförmigen Artikeln (32, 56) entsprechen, wobei die Drift durch eine Änderung der Geschwindigkeit der Förderung des Tabakstrangs (28) vor dem Schneiden von Artikeln (32, 56) kompensiert wird, wobei die Fördergeschwindigkeit bei einem Vorauseilen der LIP-Zonen (51, 61, 61') vor ihrer Sollposition verkleinert und bei einem Nacheilen vergrößert wird.

2. Verfahren nach Anspruch 1, **dadurch gekennzeichnet, dass** zur Herstellung des Tabakstrangs (28) oder der Artikel (32, 56) zunächst der Umhüllungspapierstreifen (21, 50) in einer Strangmaschine der Tabak verarbeitenden Industrie von einer Bobine (22) abgerollt wird, wobei der Umhüllungspapierstreifen (21, 50) LIP-Zonen (51, 61, 61') aufweist.

3. Verfahren zur optischen Kontrolle eines Umhüllungspapierstreifens (21, 50) der Tabak verarbeitenden Industrie, dessen Innenseite oder Außenseite Zonen (51, 61, 61') mit brandhemmendem Material ("LIP"-Zonen) aufweist, wobei das Vorhandensein und/oder weitere Eigenschaften von LIP-Zonen (51, 61, 61') auf oder in dem Umhüllungspapierstreifen (21, 50) überprüft wird, wobei die optische Kontrolle des Umhüllungspapierstreifens (21, 50) an einem mit dem Umhüllungspapierstreifen (21, 50) umhüllten Tabakstrang (28) der Tabak verarbeitenden Industrie oder an von mit dem Umhüllungspapierstreifen (21, 50) umhüllten stabförmigen Artikeln (32, 56) der Tabak verarbeitenden Industrie erfolgt, **dadurch gekennzeichnet, dass** der Tabakstrang (28) oder die Artikel (32, 56) zur Überprüfung an einem mehrkanaligen optischen Messsystem (30) vorbei oder durch das optische Messsystem (30) hindurch gefördert werden, wobei das Signal jedes Kanals des Messsystems (30) jeweils einem Verlauf einer optischen Beschaffenheit eines streifenförmigen Bereichs oder Teilbereichs der Oberfläche des Tabakstrangs (28) oder der Artikel (32, 56) entspricht, wobei in jedem Kanal Messwerte erzeugt werden, die der optischen Beschaffenheit eines Bereichs oder Teilbereichs der Oberfläche des Umhüllungspapierstreifens (21, 50) entsprechen, deren Ausdehnung in Förderrichtung des Tabakstrangs (28) oder der Artikel (32, 56) kürzer ist als die Ausdehnung einer LIP-Zone (51, 61, 61') in derselben Richtung, wobei aus den Signalen oder Messwerten der Kanäle des Messsystems (30) ein Summensignal, ein Summenmesswert, ein Durchschnittssignal (62, 62', 63, 63', 64, 65) oder ein Durchschnittsmesswert oder ein laufender Mittelwert gebildet wird, das oder der der Erkennung und/oder Überprüfung der LIP-Zonen zugrunde gelegt wird, wobei LIP-Zonen (51, 61, 61') auf einem umhüllten Tabakstrang (28) oder einem umhüllten Artikel (32, 56) als Bereiche (60, 60') mit verändertem Grauwert oder Farbwert gegenüber Bereichen des Umhüllungspapierstreifens (21, 50) ohne LIP-Zonen (51, 61, 61') erkannt werden, wobei zur Herstellung des Tabakstrangs (28) oder der Artikel (32, 56) zunächst der Umhüllungspapierstreifen (21, 50) in einer Strangmaschine der Tabak verarbeitenden Industrie von einer Bobine (22) abgerollt wird, wobei LIP-Zonen (51, 61, 61') nach dem Abrollen von der Bobine (22) auf den Umhüllungspapierstreifen (21, 50) aufgebracht werden, wobei als weitere Eigenschaft eine Drift der Position von LIP-Zonen (51, 61, 61') auf dem Umhüllungspapierstreifen (21, 50) bei aufeinander folgenden Artikeln (32, 56) oder bei aufeinander folgenden Abschnitten des Tabakstrangs (28) gemessen wird, die geschnittenen stabförmigen Artikeln (32, 56) entsprechen, wobei die Drift durch eine Vergrößerung oder Verkleinerung der Abstände bei der Aufbringung der LIP-Zonen (51, 61, 61') auf den Umhüllungspapierstreifen (21, 50) kompensiert wird.

4. Verfahren nach einem der Ansprüche 1 bis 3, **dadurch gekennzeichnet, dass** als weitere Eigenschaften Form, Vollständigkeit, Größe und/oder Position von LIP-Zonen (51, 61, 61'), Abstände zwischen LIP-Zonen (51, 61, 61') und/oder Farb- oder Grauwertintensität, Opazität und/oder Porosität des Umhüllungspapierstreifens (21, 50) in den LIP-Zonen (51, 61, 61') überprüft werden.

5. Verfahren nach einem der Ansprüche 1 bis 4, **dadurch gekennzeichnet, dass** für jede zu überprüfende Eigenschaft ein gemessener Wert daraufhin überprüft wird, ob er mit einem vorgebbaren Sollwert innerhalb eines vorgebbaren Toleranzbereichs übereinstimmt.

6. Verfahren nach einem der Ansprüche 1 bis 5, **dadurch gekennzeichnet, dass** ein Abschnitt eines Tabakstrangs (28) oder ein Artikel (32, 56), bei dem eine LIP-Zone (51, 61, 61') fehlt und/oder bei dem ein gemessener Wert einer LIP-Zone (51, 61, 61') über den vorgebbaren Toleranzbereich hinaus vom vorgebbaren Sollwert abweicht, von der weiteren Verarbeitung ausgeschlossen wird.

7. Verfahren nach einem der Ansprüche 1 bis 6, **dadurch gekennzeichnet, dass** in einer LIP-Zone (51, 61, 61') die Porosität des Umhüllungspapierstreifens (21, 50) durch nachträgliche Perforation erhöht wird, wenn die als weitere Eigenschaft gemessene Porosität des Umhüllungspapierstreifens (21, 50) in der LIP-Zone (51, 61, 61') unterhalb einer vorgebbaren Sollporosität liegt.

8. Verwendung eines optischen Sensors in einer Maschine der Tabak verarbeitenden Industrie zur Überprüfung des Vorhandenseins und/oder weiterer Eigenschaften von LIP-Zonen (51, 61, 61') auf oder in einem Umhüllungspapierstreifen (21, 50) eines mit dem Umhüllungspapierstreifen (21, 50) umhüllten Tabakstrangs (28) der Tabak verarbeitenden Industrie oder eines mit dem Umhüllungspapierstreifen (21, 50) umhüllten stabförmigen Artikel (32, 56) der Tabak verarbeitenden Industrie in einem Verfahren nach einem der Ansprüche 1 bis 7.

## Claims

1. A method for the optical inspection of a wrapping paper strip (21, 50) in the tobacco-processing industry, the inside or outside of which has zones (51, 61, 61') with fire-retardant material ("LIP" zones), wherein the presence and/or further properties of LIP zones (51, 61, 61') is checked on or in the wrapping paper strip (21, 50), wherein the optical inspection of the wrapping paper strip (21, 50) is carried out on a tobacco strand (28) wrapped with the wrapping paper strip (21, 50) in the tobacco-processing industry or on rod-shaped articles (32, 56) wrapped with the wrapping paper strip (21, 50) in the tobacco-processing industry, **characterised in that** the tobacco strand (28) or articles (32, 56) for checking are conveyed past on a multi-channel optical measuring system (30) or through the optical measuring system (30), wherein the signal of each channel of the measuring system (30) in each case corresponds to a course of an optical nature of a strip-shaped area or partial area of the surface of the tobacco strand (28) or articles (32, 56), wherein in each channel measured values are created which correspond to the optical nature of an area or partial area of the surface of the wrapping paper strip (21, 50), the extent of which in the conveying direction of the tobacco strand (28) or articles (32, 56) is shorter than the extent of an LIP zone (51, 61, 61') in the same direction, wherein from the signals or measured values of the channels of the measuring system (30), a total signal, a total measured value, an average signal (62, 62', 63, 63', 64, 65) or an average measured value or a running mean value which forms the basis of the recognition and/or checking of the LIP zones is formed, wherein LIP zones (51, 61, 61') are recognised on a wrapped tobacco strand (28) or a wrapped article (32, 56) as areas (60, 60') with a changed grey-scale value or colour value with regard to areas of the wrapping paper strip (21, 50) without LIP zones (51, 61, 61'), wherein as a further property a drift of the position of LIP zones (51, 61, 61') on the wrapping paper strip (21, 50) is measured for consecutive articles (32, 56) or for consecutive sections of the tobacco strand (28) which correspond to cut rod-shaped articles (32, 56), wherein the drift is compensated by a change in the speed of conveying of the tobacco strand (28) before the cutting of articles (32, 56), wherein the conveying speed is reduced if the LIP zones (51, 61, 61') run ahead in front of their target position and increased if they run behind.

2. The method according to Claim 1, **characterised in that** to produce the tobacco strand (28) or articles (32, 56), first of all the wrapping paper strip (21, 50) is unrolled in a strand machine in the tobacco-processing industry from a bobbin (22), wherein the wrapping paper strip (21, 50) has LIP zones (51, 61, 61').

3. A method for the optical inspection of a wrapping paper strip (21, 50) in the tobacco-processing industry, the inside or outside of which has zones (51, 61, 61') with fire-retardant material ("LIP" zones), wherein the presence and/or further properties of LIP zones (51, 61, 61') is checked on or in the wrapping paper strip (21, 50), wherein the optical inspection of the wrapping paper strip (21, 50) is carried out on a tobacco strand (28) wrapped with the wrapping paper strip (21, 50) in the tobacco-processing industry or on rod-shaped articles (32, 56) wrapped with the wrapping paper strip (21, 50) in the tobacco-processing industry, **characterised in that** the tobacco strand (28) or articles (32, 56) for checking are conveyed past on a multi-channel optical measuring system (30) or through the optical measuring system (30), wherein the signal of each channel of the measuring system (30) in each case corresponds to a course of an optical nature of a strip-shaped area or partial area of the surface of the tobacco strand (28) or articles (32, 56), wherein in each channel measured values are created which correspond to the optical nature of an area or partial area of the surface of the wrapping paper strip (21, 50), the extent of which in the conveying direction of the tobacco strand (28) or articles (32, 56) is shorter than the extent of an LIP zone (51, 61, 61') in the same direction, wherein from the signals or measured values of the channels of the measuring system (30), a total signal, a total measured value, an average signal (62, 62', 63, 63', 64, 65) or an average measured value or a running mean value which forms the basis of the recognition and/or checking of the LIP zones is formed, wherein LIP zones (51, 61, 61') are recognised on a wrapped tobacco strand (28) or a wrapped article (32, 56) as areas (60, 60') with a changed grey-scale value or colour value with regard to areas of the wrapping paper strip (21, 50) without LIP zones (51, 61, 61'), wherein to produce the tobacco strand (28) or articles (32, 56), first of all the wrapping paper strip (21, 50) is unrolled in a strand machine in the tobacco-processing industry from a bobbin (22), wherein LIP zones (51, 61, 61') are applied to the wrapping paper strip (21, 50) after unrolling from the bobbin (22), wherein as a further property a drift of the position of LIP zones (51, 61, 61') on the wrapping paper strip (21, 50) is measured for consecutive articles (32, 56) or for consecutive sections of the tobacco strand (28) which correspond to cut rod-shaped articles (32, 56), wherein the drift is compensated by an increase or decrease of the distances in the application of the LIP zones (51, 61, 61') onto the wrapping paper strip (21, 50).

4. The method according to any one of Claims 1 to 3, **characterised in that** shape, completeness, size and/or position of LIP zones (51, 61, 61'), distances between LIP zones (51, 61, 61') and/or colour or grey-scale value intensity, opacity and/or porosity of the wrapping paper strip (21, 50) in the LIP zones (51, 61, 61') are checked as further properties.

5. The method according to any one of Claims 1 to 4, **characterised in that** for each property to be checked a measured value is checked with regard to whether it matches a presettable target value within a presettable tolerance range.

6. The method according to any one of Claims 1 to 5, **characterised in that** a section of a tobacco strand (28) or an article (32, 56) in which an LIP zone (51, 61, 61') is lacking and/or in which a measured value of an LIP zone (51, 61, 61') deviates from the presettable target value over the presettable tolerance range is excluded from further processing.

7. The method according to any one of Claims 1 to 6, **characterised in that** in an LIP zone (51, 61, 61') the porosity of the wrapping paper strip (21, 50) is increased by subsequent perforation if the porosity of the wrapping paper strip (21, 50) in the LIP zone (51, 61, 61') measured as a further property is below a presettable target porosity.

8. Use of an optical sensor in a machine in the tobacco-processing industry for checking the presence and/or further properties of LIP zones (51, 61, 61') on or in a wrapping paper strip (21, 50) of a tobacco strand (28) wrapped with the wrapping paper strip (21, 50) in the tobacco-processing industry or a rod-shaped article (32, 56) wrapped with the wrapping paper strip (21, 50) in the tobacco-processing industry in a method according to any one of Claims 1 to 7.

## Revendications

1. Procédé de contrôle optique d'une bande de papier d'enveloppement (21, 50) de l'industrie de la transformation du tabac, dont la face interne ou la face externe présente des zones (51, 61, 61') contenant un matériau ignifuge (zones « LIP », à faible propension à l'inflammation), dans lequel la présence et/ou d'autres propriétés de zones LIP (51, 61, 61') est (sont) contrôlée(s) sur ou dans la bande de papier d'enveloppement (21, 50), le contrôle optique de la bande de papier d'enveloppement (21, 50) s'effectuant sur un boudin de tabac (28) de l'industrie de la transformation du tabac enveloppé dans la bande de papier d'enveloppement (21, 50), ou sur des articles en forme de tige (32, 56) de l'industrie de la transformation du tabac enveloppés dans la bande de papier d'enveloppement (21, 50), **caractérisé en ce que**, pour le contrôle, le boudin de tabac (28) ou les articles (32, 56) est (sont) transporté(s) devant un système de mesure optique multicanal (30) ou à travers le système de mesure optique (30), le signal de chaque canal du système de mesure (30) correspondant respectivement à une évolution d'une propriété optique d'une région ou région partielle en forme de bande de la surface du boudin de tabac (28) ou des articles (32, 56), dans lequel des valeurs de mesure sont générées dans chaque canal, lesquelles correspondent à la propriété optique d'une région ou région partielle de la surface de la bande de papier d'enveloppement (21, 50), dont la dimension dans la direction de transport du boudin de tabac (28) ou des articles (32, 56) est plus courte que la dimension d'une zone LIP (51, 61, 61') dans la même direction, dans lequel un signal somme, une valeur de mesure somme, un signal moyen (62, 62', 63, 63', 64, 65) ou une valeur de mesure moyenne ou une valeur moyenne actuelle est formé(e) à partir des signaux ou des valeurs de mesure des canaux du système de mesure (30), lequel/laquelle sert de base pour la détection et/ou le contrôle des zones LIP, dans lequel des zones LIP (51, 61, 61') présentes sur un boudin de tabac (28) enveloppé ou sur un article (32, 56) enveloppé sont détectées en tant que régions (60, 60') présentant une valeur de gris ou une valeur de couleur modifiée par rapport à des régions de la bande de papier d'enveloppement (21, 50) dépourvues de zones LIP (51, 61, 61'), dans lequel, comme autre propriété, une dérive de la position de zones LIP (51, 61, 61') sur la bande de papier d'enveloppement (21, 50) est mesurée sur des articles (32, 56) successifs ou sur des segments successifs du boudin de tabac (28) correspondant à des articles en forme de tige découpés (32, 56), la dérive étant compensée par une modification de la vitesse de transport du boudin de tabac (28) avant le découpage d'articles (32, 56), la vitesse de transport étant réduite en cas d'avance des zones LIP (51, 61, 61') sur leur position de consigne ou augmentée en cas de retard.

2. Procédé selon la revendication 1, **caractérisé en ce que** pour la fabrication du boudin de tabac (28) ou des articles (32, 56), la bande de papier d'enveloppement (21, 50) est tout d'abord déroulée à partir d'une bobine (22) dans une machine à confectionner des boudins de l'industrie de la transformation du tabac, la bande de papier d'enveloppement (21, 50) présentant des zones LIP (51, 61, 61').

3. Procédé de contrôle optique d'une bande de papier d'enveloppement (21, 50) de l'industrie de la transformation du tabac, dont la face interne ou la face externe présente des zones (51, 61, 61') contenant un matériau ignifuge (zones « LIP », à faible propension à l'inflammation), dans lequel la présence et/ou d'autres propriétés de zones LIP (51, 61, 61') est (sont) contrôlée(s) sur ou dans la bande de papier d'enveloppement (21, 50), le contrôle optique de la bande de papier d'enveloppement (21, 50) s'effectuant sur un boudin de tabac (28) de l'industrie de la transformation du tabac enveloppé dans la bande de papier d'enveloppement (21, 50), ou sur des articles en forme de tige (32, 56) de l'industrie de la transformation du tabac enveloppés dans la bande de papier d'enveloppement (21, 50), **caractérisé en ce que** le boudin de tabac (28) ou les articles (32, 56) est (sont) transporté(s) devant un système de mesure optique multicanal (30) ou à travers le système de mesure optique (30), le signal de chaque canal du système de mesure (30) correspondant respectivement à une évolution d'une propriété optique d'une région ou région partielle en forme de bande de la surface du boudin de tabac (28) ou des articles (32, 56), dans lequel, des valeurs de mesure sont générées dans chaque canal, lesquelles correspondent à la propriété optique d'une région ou région partielle de la surface de la bande de papier d'enveloppement (21, 50), dont la dimension dans la direction de transport du boudin de tabac (28) ou des articles (32, 56) est plus courte que la dimension d'une zone LIP (51, 61, 61') dans la même direction, dans lequel un signal somme, une valeur de mesure somme, un signal moyen (62, 62', 63, 63', 64, 65) ou une valeur de mesure moyenne ou une valeur moyenne actuelle est formé(e) à partir des signaux ou des valeurs de mesure des canaux du système de mesure (30), lequel/laquelle sert de base pour la détection et/ou le contrôle des zones LIP, dans lequel des zones LIP (51, 61, 61') présentes sur un boudin de tabac (28) enveloppé ou sur un article (32, 56) enveloppé sont détectées en tant que régions (60, 60') présentant une valeur de gris ou une valeur de couleur modifiée par rapport à des régions de la bande de papier d'enveloppement (21, 50) dépourvues de zones LIP (51, 61, 61'), dans lequel, pour la fabrication du boudin de tabac (28) ou des articles (32, 56), la bande de papier d'enveloppement (21, 50) est tout d'abord déroulée à partir d'une bobine (22) dans une machine à confectionner des boudins de l'industrie de la transformation du tabac, dans lequel des zones LIP (51, 61, 61') sont appliquées sur la bande de papier d'enveloppement (21, 50) après le déroulement à partir de la bobine (22), dans lequel, comme autre propriété, une dérive de la position de zones LIP (51, 61, 61') sur la bande de papier d'enveloppement (21, 50) est mesurée sur des articles (32, 56) successifs ou sur des segments successifs du boudin de tabac (28) correspondant à des articles en forme de tige découpés (32, 56), la dérive étant compensée par un agrandissement ou une réduction des écartements lors de l'application des zones LIP (51, 61, 61') sur la bande de papier d'enveloppement (21, 50).

4. Procédé selon l'une des revendications 1 à 3, **caractérisé en ce que** la forme, l'intégrité, la dimension et/ou la position de zones LIP (51, 61, 61'), les écartements entre zones LIP (51, 61, 61') et/ou l'intensité de couleur ou de gris, l'opacité et/ou la porosité de la bande de papier d'enveloppement (21, 50) dans les zones LIP (51, 61, 61'), sont contrôlés comme autres propriétés.

5. Procédé selon l'une des revendications 1 à 4, **caractérisé en ce que** pour chaque propriété à contrôler, une valeur mesurée est contrôlée quant à sa concordance avec une valeur de consigne prédéfinissable dans une plage de tolérance prédéfinissable.

6. Procédé selon l'une des revendications 1 à 5, **caractérisé en ce qu'**un segment d'un boudin de tabac (28) ou un article (32, 56), dans lequel il manque une zone LIP (51, 61, 61') et/ou dans lequel une valeur mesurée d'une zone LIP (51, 61, 61') s'écarte de la valeur de consigne prédéfinissable au-delà de la plage de tolérance prédéfinissable, est exclue de la suite du traitement.

7. Procédé selon l'une des revendications 1 à 6, **caractérisé en ce que** dans une zone LIP (51, 61, 61'), la porosité de la bande de papier d'enveloppement (21, 50) est augmentée par une perforation ultérieure lorsque la porosité de la bande de papier d'enveloppement (21, 50) dans la zone LIP (51, 61, 61'), mesurée comme autre propriété, est inférieure à une porosité de consigne prédéfinissable.

8. Utilisation d'un détecteur optique dans une machine de l'industrie de la transformation du tabac pour le contrôle de la présence et/ou d'autres propriétés de zones LIP (51, 61, 61') sur ou dans une bande de papier d'enveloppement (21, 50) d'un boudin de tabac (28) de l'industrie de la transformation du tabac enveloppé dans la bande de papier d'enveloppement (21, 50) ou d'un article en forme de tige (32, 56) de l'industrie de la transformation du tabac enveloppé dans la bande de papier d'enveloppement (21, 50) dans un procédé selon l'une des revendications 1 à 7.
